# EUROPEAN PATENT SPECIFICATION

(11) **EP 3 972 154 B1**
(45) Date of publication and mention of the grant of the patent: **07.05.2025**
(21) Application number: 20306077.7
(22) Date of filing: 22.09.2020
(51) Int. Cl.: H04B 10/071

(54) **MONITORING OF OPTICAL FIBERS IN PASSIVE OPTICAL NETWORKS**
ÜBERWACHUNG VON OPTISCHEN FASERN IN PASSIVEN OPTISCHEN NETZWERKEN
SURVEILLANCE DE FIBRES OPTIQUES DANS DES RÉSEAUX OPTIQUES PASSIFS

(43) Date of publication of application: 23.03.2022
(73) Proprietor: Nokia Solutions and Networks Oy, 02610 Espoo (FI)
(72) Inventor: CAILLAUD, Christophe, 94110 ARCUEIL (FR); BONK, Rene, 75181 PFORZHEIM (DE)
(74) Representative: Novagraaf Technologies

(56) References cited:
- US-B2- 7 046 349
- QIU XING-ZHI ET AL: "Embedded OTDR Monitoring of the Fiber Plant behind the PON Power Splitter Burst-Mode Receiver View project translation View project Embedded OTDR Monitoring of the Fiber Plant behind the PON Power Splitter", 31 January 2006 (2006-01-31), pages 13 - 16, XP055783269, Retrieved from the Internet <URL:https://www.researchgate.net/profile/Xing-Zhi-Qiu-2/publication/238080336_Embedded_OTDR_Monitoring_of_the_Fiber_Plant_behind_the_PON_Power_Splitter/links/0a85e53725f6049569000000/Embedded-OTDR-Monitoring-of-the-Fiber-Plant-behind-the-PON-Power-Splitter.pdf> [retrieved on 20210309]
- SCHMUCK H ET AL: "Embedded OTDR techniques for cost-efficient fibre monitoring in optical access networks", PROCEEDINGS / ECOC 2006, 32ND EUROPEAN CONFERENCE ON OPTICAL COMMUNICATION : 24 - 28 SEPTEMBER 2006, CANNES, FRANCE, SEE, PARIS, FRANCE, 24 September 2006 (2006-09-24), pages 1 - 2, XP031436994, ISBN: 978-2-912328-39-7
- SCHMUCK H ET AL: "Embedded OTDR measurement range extension for future metro-access networks employing in-line SOAs", 2014 THE EUROPEAN CONFERENCE ON OPTICAL COMMUNICATION (ECOC), SYSTEMATIC PARIS REGION SYSTEMS AND ICT CLUSTER, 21 September 2014 (2014-09-21), pages 1 - 3, XP032689304, DOI: 10.1109/ECOC.2014.6963869

## Description

### TECHNICAL FIELD

Various example embodiments relate generally to the monitoring of optical fibers in passive optical networks, for example in optical access networks, and more specifically to an apparatus adapted for an optical network unit and an apparatus adapted for an optical line terminal.

### BACKGROUND

Autonomous (without human intervention or pausing the data transmission) monitoring of a fiber network is very important in optical access network to allow fast troubleshooting, maintenance and operation of the fiber infrastructure. Optical time domain reflectometry (OTDR) is the main technique to investigate the operating state of the fiber infrastructure, for example to detect some defect in a given fiber section. Operators need for example to prevent and find the location of a breakdown when it appears.

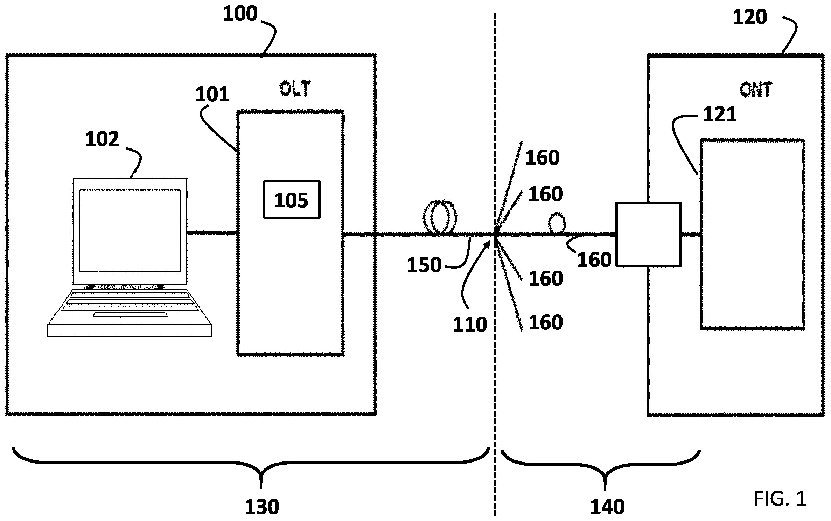

As represented by FIG. 1, typical optical access network are implemented using a point-to-multi-point topology involving a feeder section (130) connecting an Optical Line Terminal (OLT) (101) in a central office (CO) equipment (100) with a passive 1:N power splitter (110) followed by N drop sections (140) connecting the power splitter (110) with an optical receiver (121) (e.g. optical network termination ONT or optical network unit, ONU) at the customer premise equipment (120).

The OTDR monitoring of the fibers (150) in the feeder section (130) may be performed according to any known technic. To monitor the splitter-ONT branches, a centralized OTDR (105) unit located at the central office (100) side may for example be used in association with a processing unit (102).

However, it is very challenging to monitor the fiber branches (160) in the drop sections (140) between the power splitter (110) and the optical receiver (121). The fiber branches (160) are difficult to resolve individually or uniquely. First of all, the power splitter (110) causes the optical power to drop significantly which increases the challenges of a centralized OTDR unit in terms of optical power dynamic range. However, even employing the most powerful OTDR unit a key challenge remains due to the fact that the back-reflected light from the individual fiber branches (160) overlaps and thus a resolution of the individual branches is cumbersome.

Other approaches using mirrors at the customer side (120 to allow monitoring of reflection events / signals through the common feeder section (130) and thus of the connectivity status of ONTs do not allow to resolve the individual fiber branches (160) since the reflected events / signals overlap in the common feeder section (130).

Article by Schmuck et al., entitled "Embedded OTDR measurement range extension for future metro-access networks employing in-line SOAs", Proceedings ECOC 2014, European Conference on Optical Communication, 21-25 September 2014, XP032689304 discloses an embedded OTDR system employing SOA within the fiber network by which monitoring across multiple SOA-amplified fiber segments with simultaneously GPON downstream transmission is achieved.

Article by Qiu Xing-Zhi et al, entitled « Embedded OTDR Monitoring of the Fiber Plant behin the PON Power Splitter", published 31 January 2003, XP055783269 discloses a PON ONU transceiver with embedded OTDR functions.

Article by Schmuck et al., entitled "Embedded OTDR techniques for cost-efficient fibre monitoring in optical access networks", Proceedings ECOC 2006, 32nd European Conference on Optical Communication", 24-28 September 2006, XP031436994 discloses a bidirectional transceiver with embedded OTDR functions.

### SUMMARY

The scope of protection is set out by the independent claims. The embodiments, examples and features, if any, described in this specification that do not fall under the scope of the protection are to be interpreted as examples useful for understanding the various embodiments or examples that fall under the scope of protection.

According to a first aspect, an apparatus comprises: a preamplification semiconductor optical amplifier, SOA, section configured to receive at a first output a first optical signal transmitted through an optical fiber and to perform preamplification of the first optical signal to generate at a second output an amplified optical signal; a first photodiode optically connected to the second output of the preamplification SOA section and configured to convert the amplified optical signal into a first electrical signal; a source signal generation SOA section configured to generate an Optical Time Domain Reflectometry, OTDR, source signal for transmission through the optical fiber in a direction opposite to the first optical signal; wherein the preamplification SOA section is configured to receive at the first output in response to the OTDR source signal an OTDR back-reflected signal transmitted through the optical fiber and to perform preamplification of the OTDR back-reflected signal.

In one or more embodiments, the preamplification SOA section is operable with a constant driving current to perform preamplification of the first optical signal and the source signal generation SOA section is operable with at least one of a pulsed driving current and a modulated driving current to generate the OTDR source signal.

In one or more embodiments, the source signal generation SOA section and the preamplification SOA section are a same SOA section.

In one or more embodiments, the apparatus comprises a driving circuit configured to receive a trigger signal from an optical line terminal and to cause the source signal generation SOA section to enter into an OTDR monitoring cycle during which the OTDR source signal is transmitted through the optical fiber and an OTDR back-reflected signal is received through the optical fiber, wherein the apparatus is configured to operate in a Passive Optical Network, PON, and transmission of PON data signal through the optical fiber of said PON, is interrupted during the OTDR monitoring cycle.

In one or more embodiments, the apparatus comprises a detection circuit section configured to extract from the first optical signal or the first electrical signal an OTDR signal component corresponding to at least one of the OTDR source signal and the OTDR back-reflected signal carried by the first optical signal.

In one or more embodiments, the apparatus comprises a biasing circuit electrically connected to the photodiode and configured to extract from the first electrical signal the OTDR signal component corresponding to at least one of the OTDR back-reflected signal and the OTDR source signal.

In one or more embodiments, the source signal generation SOA section is optically connected to the second output of the preamplification SOA section.

In at least one embodiment, the source signal generation SOA section is configured to alternate between emission time intervals during which the source signal generation SOA section is configured to generate the OTDR source signal and detection time intervals during which the source signal generation SOA section is configured to interrupt the generation of the OTDR source signal to allow the detection of the OTDR reflected signal received in response to an OTDR source signal generated in the previous emission time interval.

In at least one embodiment, the apparatus comprises a second photodiode optically connected to the second output of the preamplification SOA section; wherein the second photodiode configured to extract from the amplified optical signal an OTDR signal component corresponding to at least one of a OTDR back-reflected signal and the OTDR source signal and to convert the OTDR signal component into a second electrical signal.

The embodiments and aspects disclosed herein may be combined in various ways.

### BRIEF DESCRIPTION OF THE DRAWINGS

Example embodiments will become more fully understood from the detailed description given herein below and the accompanying drawings, which are given by way of illustration only and thus are not limiting of this disclosure.
FIG. 1, already described, shows a schematic of a passive optical network (PON) including monitoring functions to monitor the fiber infrastructure.
FIG. 2 illustrates aspects of embodiments of an optical network unit and optical line terminal.
FIG. 3 illustrates aspects of embodiments of an optical network unit and optical line terminal.
FIGS. 4A-4D illustrate a first embodiment of an optical network unit.
FIGS. 5A-5D illustrate a second embodiment of an optical network unit.
FIG. 6A-6B illustrate a third embodiment of an optical network unit.
FIG. 7 illustrates a fourth embodiment of an optical network unit.

It should be noted that these figures are intended to illustrate the general characteristics of methods, structure and/or materials utilized in certain example embodiments and to supplement the written description provided below. These drawings are not, however, to scale and may not precisely reflect the precise structural or performance characteristics of any given embodiment, and should not be interpreted as defining or limiting the range of values or properties encompassed by example embodiments. The use of similar or identical reference numbers in the various drawings is intended to indicate the presence of a similar or identical element or feature.

### DETAILED DESCRIPTION

Various example embodiments will now be described more fully with reference to the accompanying drawings in which some example embodiments are shown.

Detailed example embodiments are disclosed herein. However, specific structural and functional details disclosed herein are merely representative for purposes of describing example embodiments. The example embodiments may, however, be embodied in many alternate forms and should not be construed as limited to only the embodiments set forth herein. Accordingly, while example embodiments are capable of various modifications and alternative forms, the embodiments are shown by way of example in the drawings and will be described herein in detail. It should be understood, however, that there is no intent to limit example embodiments to the particular forms disclosed.

In order to monitor a fiber branch between the power splitter and the customer premise in an optical network a semiconductor optical amplifier is used at the optical network unit (ONU / ONT) side as OTDR source.

Semiconductor optical amplifiers are optical amplifiers which use a semiconductor to provide the gain medium. Semiconductor optical amplifiers may typically be made from group III-V compound semiconductors such as GaAs/AlGaAs, InP/InGaAs, InP/InGaAsP and InP/InAlGaAs, though any direct band gap semiconductors such as II-VI could conceivably be used. Such amplifiers may be operated at signal wavelengths between 850 nm and 1600 nm and generating gains of up to 30 dB.

A semiconductor optical amplifier (SOA) may be used as post-amplifier to increase the transmitter laser power, as in-line amplifier to compensate for fiber or other transmission losses in a medium, or as preamplifier by increasing the power level of an optical signal received by a receiver before this signal is processed (e.g. detected, demodulated, filtered etc) by the receiver.

An SOA is electrically driven. Depending on the driving current, an SOA may perform different functions. The frequency and / or shape of the driving current may vary as appropriate. For example, if the SOA is driven by a DC (direct current) driving current (i.e. constant level current) the SOA produces static preamplification gain. If the SOA is driven by a DC driving current whose amplitude is modulated at a given frequency (e.g. a low frequency in the kHz or MHz range, much lower than the high frequency range, e.g. GHz range, used for the PON data signal carrying the user data frames), the SOA produces static preamplification gain and at the same time generates a modulated signal that can be used as an OTDR source signal. Further the SOA may be alternately driven by a DC current or by any pulse or modulated current to operate alternately as preamplifier and as OTDR source: shape and frequency of the OTDR source signal will vary in dependence of the shape and frequency driving current.

As an SOA is configured to transmit light at the same time in downstream and upstream directions, it may be considered to have two optical outputs: a first output in downstream direction (i.e. from the OLT side or central office side toward the ONU / ONT side or user side), referred to herein as the downstream output, and a second output in upstream direction, referred to herein as the upstream output. These two outputs may be said to be in opposite transmission direction one with respect to the other.

Within a same semiconductor circuit, one or more sections (or portions of the circuit) may be configured to form a semiconductor optical amplifier. Such a section will be referred to herein as "semiconductor optical amplifier section" or "SOA section".

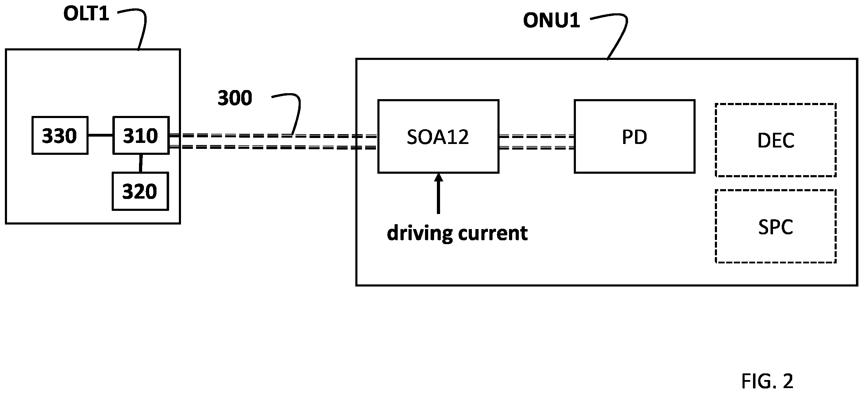

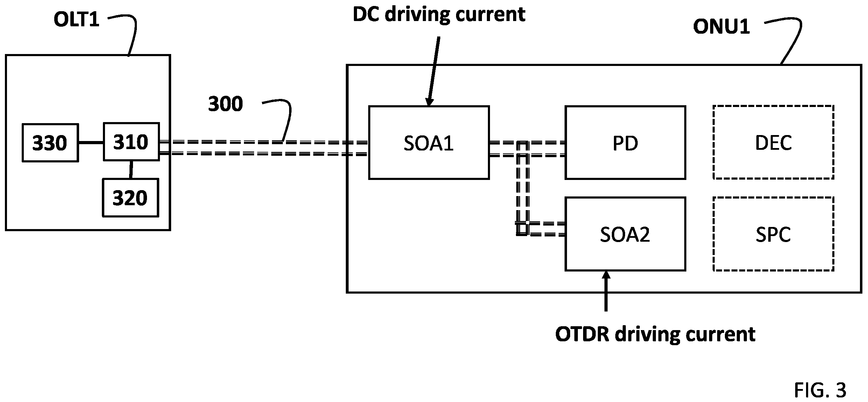

Several aspects of an optical receiver (e.g. optical network termination ONT or optical network unit, ONU) will now be described by reference to FIGS. 2 and 3. For simplification, the wording "optical network unit" is used but the description is likewise applicable to an optical network termination (ONT).

In one or more embodiments, the optical network unit (ONU1) includes a first SOA section (SOA12 of FIG. 2, SOA1 of FIG. 3) configured to amplify a downstream optical signal received through an optical fiber from the optical line terminal (OLT1) (e.g the OLT at central office side). The first SOA section is also referred to as the "preamplification SOA section". The downstream optical signal may *inter alia* include the PON data signal. The PON data signal may carry useful data frames and control data frames (e.g. synchronization data frames, etc) as e.g. described in G.9807.1 "10-Gigabit-capable symmetric passive optical network (XGS-PON)".

The first SOA section (SOA1) is operated with a constant driving current (DC driving current) to adjust the preamplification gain applied to the downstream optical signal.

In one or more embodiments, the first SOA section is associated with a photodiode (PD). The photodiode may be a high-speed photodiode, an avalanche diode, a "standard" photodiode, etc. The photodiode (PD) is optically connected to a downstream output of the first SOA section (SOA1) and is configured to convert the amplified optical signal from the first SOA section into an electrical signal. The photodiode (PD) may be directly connected to a downstream output of the first SOA section (SOA1) or through an optical filter optically connected between the downstream output of the first SOA section (SOA1) and the photodiode (PD).

In one or more embodiments, the optical network unit (ONU1) includes a second SOA section (SOA12 of FIG. 2, SOA2 of FIG. 3) driven by an OTDR driving current so as to act as an OTDR source, thereby generating an OTDR source signal. The second SOA section is also referred to as the "source signal generation SOA section". The OTDR source signal is transmitted in upstream direction through the fiber (300) and may cause a downstream OTDR back-reflected signal (a back-reflected signal produced by Rayleigh backscattering) to be received at the optical network unit (ONU1) as an OTDR signal component of the downstream optical signal.

A pulsed and / or modulated OTDR driving current may be used for the second SOA section to generate a pulsed and / or modulated OTDR source signal. The OTDR driving current may correspond to a test sequence. A low frequency modulation (corresponding for example to a test sequence) may for example be used for the OTDR driving current to generate a low frequency modulated OTDR source signal.

When using only a single SOA section (SOA12) (see FIG. 2) and the SOA section (SOA12) is not operated in pulsed or modulated mode for generating the OTDR source signal (we are outside a monitoring cycle), the SOA section (SOA12) may be driven with a constant driving current to generate the required preamplification gain.

When there are two physically distinct SOA sections (see FIG. 3) and when the second SOA section (SOA12) is not used for generating the OTDR source signal, the SOA section (SOA12) may be driven with a constant driving current or simply be switched off.

Various pulse shapes and durations (e.g. Gaussian, etc) and repetition frequencies (ranging from kHz to MHz or higher) may also be used for the OTDR driving current to cause the second SOA section to generate the upstream OTDR source signal. (for example: a 1 ns Gaussian shaped pulse with a msec to sec repetition rate).

The upstream OTDR source signal causes a downstream OTDR reflected signal in the optical fiber 300. The downstream optical signal may therefore include high frequencies carrying the PON data frames (useful data frames, synchronization data frames, etc) and / or low frequencies carrying the OTDR back-reflected signal. The high frequencies of the downstream optical signal correspond to a PON data signal component of the downstream optical signal while the low frequencies correspond to the OTDR signal component of the downstream optical signal.

The high frequencies of the downstream optical signal may depend on the choice of the PON system generation and may e.g. be between 1.8GHz for GPON and up to 35 GHz for future 50Gbit/s PON. These specifications are dependent on the specific PON implementations and thus the higher frequency may vary. The low frequencies of the downstream optical signal may be between 10kHz and 100 kHz. Here also the low frequency cut-off also may depend on implementation examples. The same can apply for the upstream optical signal or the electrical signal converted by the photodiode from the downstream optical signal: These signals may include a PON data signal component and / or an OTDR signal component. In the optical signal which preamplified by the first SOA section and converted by the photodiode (PD) the OTDR signal component may correspond to the downstream OTDR reflected signal and / or the upstream OTDR source signal.

By using a single SOA embodiment (see FIG. 2) or a two SOAs embodiment (see FIG. 3), one can achieve simultaneously the optimization of the receiver sensitivity for the data signal due to SOA pre-amplification and of the OTDR monitoring using the SOA as well. The SOA allows the generation of a wide spectral width OTDR source which is immune to coherent Rayleigh backscattering contrary to DFB (Distributed Feedback) lasers. Further, the same SOA and photodiode may be used to do simultaneously the OTDR monitoring and the high-speed detection of the PON data signal. Further the first SOA section (SOA1) is used to amplify the OTDR backward reflected signal received through the optical fiber in downstream direction before transmission of the preamplified optical signal to the photodiode (PD) for OTDR signal processing. Therefore the first SOA section is used for preamplification of the PON data signal and the OTDR back-reflected signal. This allows simplified and low cost implementation of the ONU.

On central office side, an optical line terminal (OLT1) may include a transmission circuit (310) configured to send PON data frames to one or more optical network units, ONUs. In one or more embodiments, the transmission circuit (310) is configured to interrupt transmission of the PON data frames to the first optical network unit (ONU1) during a monitoring cycle having a duration which is adjusted to prevent collision between a PON data frame and an OTDR back reflected signal caused by the OTDR source signal. The optical line terminal (OLT1) may include a reception circuit (320) configured to receive an optical signal. The optical line terminal (OLT1) may include a trigger circuit (330) configured to send a trigger signal to one or more optical network unit(s) (ONU1) to trigger a monitoring cycle and thereby to cause the concerned optical network unit(s) (ONU1) to generate an OTDR source signal.

According to a first example of the optical network unit (ONU1) schematically illustrated by FIG. 2, the same SOA section (SOA12) are used as an optical preamplifier for the downstream optical signal and as a source for OTDR monitoring: only one single SOA section may be used, thereby reducing the size and costs of the optical network unit (ONU1). Said differently: a same semiconductor optical amplifier or a same SOA section performs the functions described here for the first SOA section and the second SOA section. It is to be noted that as an SOA always emits light due to amplified spontaneous emission (ASE) in upstream and downstream directions, the OTDR source signal is therefore also transmitted in downstream direction to the photodiode (PD). Further the SOA section (SOA12) is also used to amplify the backward reflected OTDR signal in downstream direction before passing it to the photodiode (PD) for OTDR signal reception and conversion to an electrical signal.

According to a second example of the optical network unit (ONU1) schematically illustrated by FIG. 3, two distinct SOA sections (SOA1, SOA2) are used, the first SOA section (SOA1) being used as an optical preamplifier for the downstream optical signal (including during a monitoring cycle the OTDR backward reflected signal) and the second SOA section (SOA2) being used as a source for OTDR monitoring. In this second example, the OTDR source signal is not transmitted in downstream direction to the photodiode (PD): the OTDR signal component received by the photodiode (PD) in the downstream optical signal includes only the downstream OTDR back-reflected signal.

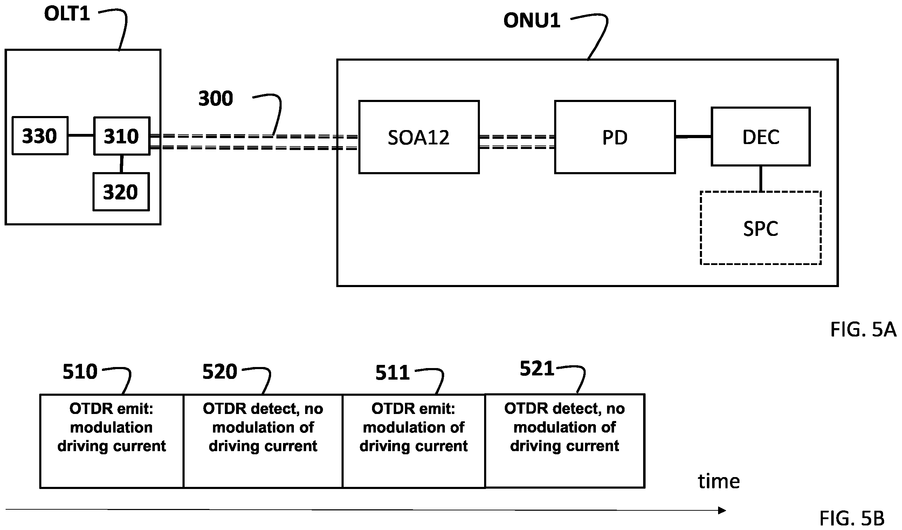

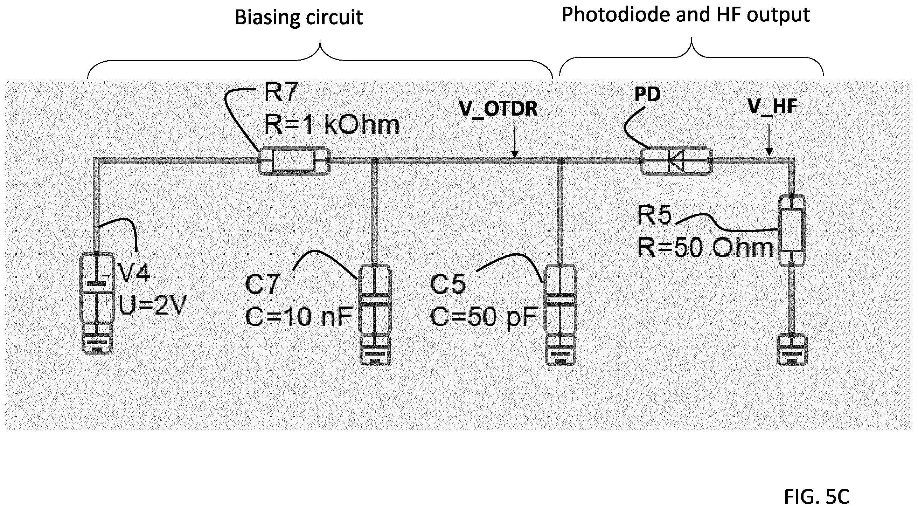

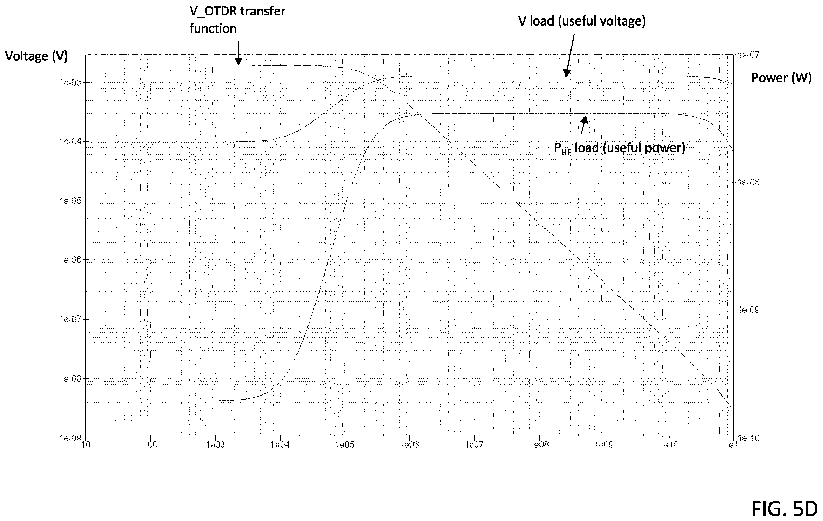

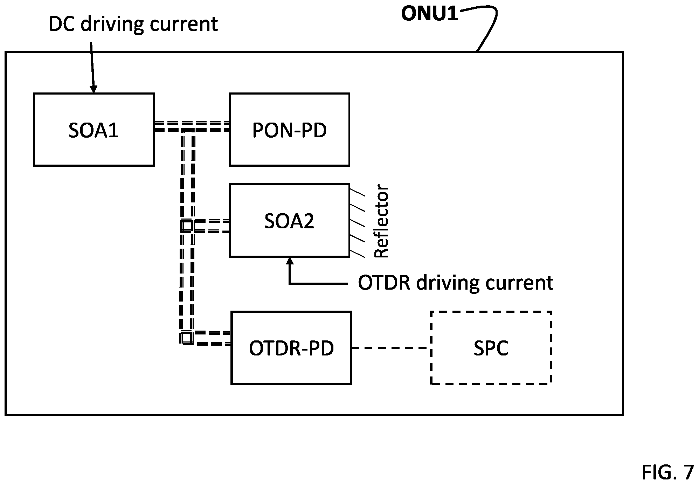

The downstream optical signal which is received at a given time through the optical fiber at upstream output of the first SOA section and is amplified by this first SOA section may include (depending on which embodiment is used and / or whether a monitoring cycle is currently performed) a PON data signal and / or an OTDR back reflected signal: the PON data signal is the PON data signal component of the downstream optical signal and the OTDR back reflected signal is the OTDR signal component of the PON data signal. The optical network unit may thus include a detection circuit section (DEC) configured to detect and / or extract, either from the downstream optical signal (after preamplification and before conversion to an electrical signal by a photodiode) or from the electrical signal generated by the photodiode, an OTDR signal component corresponding to the upstream OTDR source signal and / or a downstream OTDR back-reflected signal carried by the downstream optical signal received through the optical fiber at upstream output of the first SOA section: this reflected signal is used for performing OTDR monitoring. The separation between the OTDR component (corresponding to a first wavelength or frequency band) and the PON data signal component (corresponding to a second wavelength or frequency band) can be performed by filtering in optical domain or in electrical domain after conversion into an electrical signal by a photodiode. As will be illustrated below by reference FIGS. 5 to 7, this detection circuit section (DEC) may be either optically or electrically implemented: the detection circuit section (DEC) may be an optical circuit section (including the second photodiode OTDR-PD in FIG. 7 that performs both the extraction and the conversion to electrical signal) or an electrical circuit section (analog or digital processing circuit) implemented as a frequency filtering circuit or as a biasing circuit (see for example the biasing circuit of photodiode PD in FIGS. 5 to 6).

The optical network unit (ONU1) may further include a signal processing circuit (SPC) configured to analyze or otherwise process the OTDR signal component corresponding to the upstream OTDR source signal and / or a downstream OTDR back-reflected signal. As explained, the OTDR signal component may be extracted by a detection circuit section (DEC) or may corresponds to a component of the electrical signal generated by the photodiode (PD) from the downstream optical signal in the absence of a detection circuit section (DEC).

By using a source for OTDR monitoring at the ONT / ONU side, at least some drawbacks of a centralized OTDR unit may be avoided. This allow also to monitor individually the optical fiber branches between the ONT and the power splitter is a powerful source.

Further additional costs at the ONT / ONU side can be avoided by taking advantages of the trends in PON in term of data transmission rates. Currently, the trend is to use higher and higher data rates (for example 25Gbits and 50Gbits) using a single wavelength for upstream and downstream transmission respectively. To achieve the required optical power budget (measuring the losses between OLT transmitter launch power and the receiver sensitivity threshold, corresponding to the optical path penalty, e.g. from dispersion) of up to 35dB a semiconductor optical amplifier based is used at the optical network unit. This is especially true due to the lack of the availability of performant avalanche photodiodes at 50Gbits.

The sensitivity of the ONT / ONU -receiver in high speed PON applications may be increased. In parallel, with next generation high speed TDM (Time Division Multiplex) and TWDM-PON (Time and Wavelength Division Multiplex) at 25/50Gbits and above, optical preamplification performed by a SOA at the ONT / ONU side allow to cope with the required optical power budget of PON network.

Various examples and embodiments will now be described.

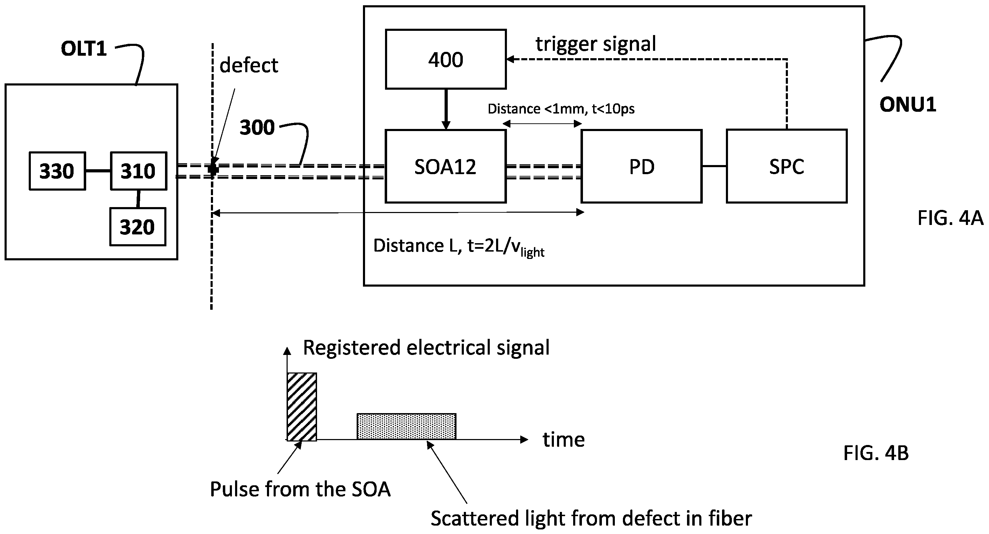

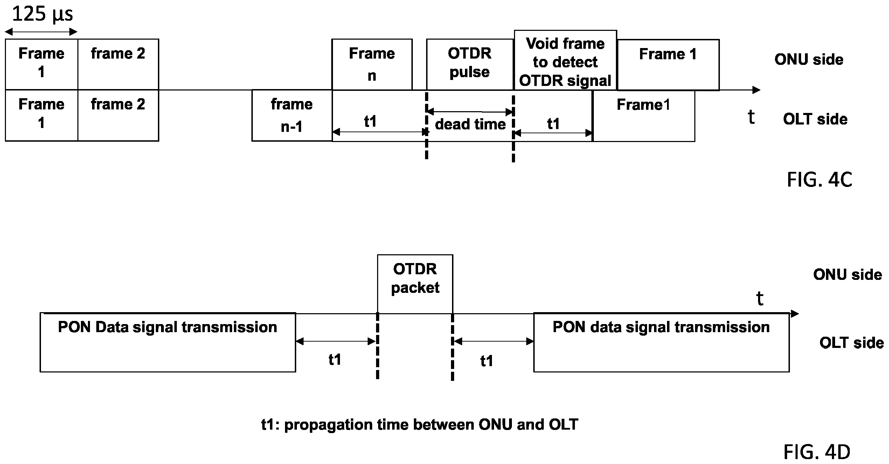

A first embodiment will now be described by reference to FIGS. 4A to 4D. In this first embodiment (see FIG. 4A), also referred to as the burst mode, only a single SOA section (SOA12) is used as an optical preamplifier for the downstream optical signal and as a source for OTDR monitoring as previously described by reference to FIG. 2. The optical network unit (ONU1) also includes a photodiode (PD) that is optically connected to a downstream output of the SOA section (SOA12) and configured to convert the amplified optical signal into an electrical signal. Further, as illustrated by FIGS. 4C-4D time domain multiplexing is performed such that the transmission of PON data frames is interrupted during the OTDR monitoring cycle and vice versa.

The time domain multiplexing is implemented such that the PON data signal transmission through the optical fiber(s) in the drop section to be monitored is paused to allow a complete OTDR measurement cycle to be triggered and run until reception of the OTDR back-reflected signal by the concerned optical network unit(s) (ONU1). The first step is that the optical line terminal (OLT1) informs per broadcast or individually one or more optical network units (ONU1) to perform an OTDR measurement. A trigger signal is sent by the optical line terminal (OLT1) to one or more optical network units (ONU1). The trigger signal may be included in a PON data frame and decoded at ONU side by a decoding circuit (e.g. a signal processing circuit) based on the electrical signal generated by the photodiode (PD). To allow clear observation of the individual fiber drop section between the ONU and the power splitter, the individual OTDR operation of the ONUs is used, and the ONUs may for example perform OTDR measurement using a round-robin scheme.

After the OTDR measurement cycle is triggered and each concerned ONU is informed by a trigger signal, the OLT may either pause the downstream transmission entirely or only allow to transmit the PSBd data (physical synchronization building block in downstream direction) and skip the payload data. After time alignment of the active ONUs in a PON to the beginning of a same upstream frame the OLT knows about the equalization delays of each ONU and thus the OLT is aware of the position (distance from OLT-ONU and vice versa) of a particular ONU in the PON and knows the duration necessary for each concerned ONU to send an OTDR source signal into the fiber infrastructure and to receive the OTDR reflected signal (back-reflected/scattered light) from the optical infrastructure. This knowledge can be applied to accommodate the OTDR pulse generation and the identification of a particular section of e.g. the optical fiber in drop section between the optical power splitter and the ONU. That is also helpful in one or more embodiments to optimize the duration of the time interval during which PON data signal transmission may be interrupted and duration of the OTDR measurement cycle.

During a monitoring cycle, or at least to generate the OTDR source signal, the driving current of the SOA section (SOA12) may be a pulse current to generate a pulse signal as an OTDR source signal. Various pulse shapes (e.g. Gaussian, etc) may be used. Outside a monitoring cycle, the driving current of the SOA section (SOA12) is a DC current so that the SOA section (SOA12) operates as preamplifier.

The OTDR monitoring is synchronized with the downstream operation of the PON. The optical line terminal (OLT) is configured to inform individual ONUs to perform an OTDR measurement. The optical line terminal (OLT) is configured to pause the downstream transmission of PON data frames for up to few frames (e.g. 2 frames equal 250µs for 25km round trip time, RTT) to allow the upstream OTDR source signal from a given optical network unit (ONU1) to propagate upstream and reach to the optical line terminal (OLT1) and to allow the downstream OTDR reflected signal to be detected at the optical network unit (ONU1) without cross-talk from the PON data signal.

During the OTDR monitoring cycle the upstream OTDR source signal is generated, transmitted from the optical network unit (ONU1) to the optical line terminal (OLT1) and the downstream OTDR back-reflected signal is transmitted from the optical line terminal (OLT1) to the optical network unit (ONU1). For example the optical line terminal (OLT1) may be configured to wait for the end of the monitoring cycle before resuming the transmission of the optical data frames. Therefore the transmission of optical data frames never causes interferences for the upstream OTDR source signal or the downstream OTDR back-reflected signal and vice versa.

In order to synchronize the optical line terminal (OLT1) with the optical network unit (ONU1), the optical network unit (ONU1) includes a driving circuit (400) configured to receive a trigger signal from the optical line terminal (OLT1) and to cause the SOA section (SOA12) to generate the upstream OTDR source signal after receipt of the trigger signal. As shown by FIG. 4C, the trigger signal may be transmitted in PON data frame #n. The optical line terminal (OLT1) includes a trigger circuit (330) configured to send a trigger signal to the optical network unit (ONU1) to cause the optical network unit (ONU1) (more precisely the SOA section (SOA12) of the optical network unit (ONU1)) to generate the upstream OTDR source signal.

The optical line terminal (OLT1) is configured to interrupt transmission of the PON data frames to a given optical network unit (ONU1) during a monitoring cycle having a duration which is adjusted to prevent collision between a PON data frame and an OTDR back reflected signal caused by the OTDR source signal generated by the given optical network unit (ONU1). The optical line terminal (OLT1) is configured to interrupt of optical data frames during the monitoring cycle whose duration is at most the sum of :
- Twice the propagation time t1 for transmission of an optical signal (e.g. for transmission of the upstream OTDR source signal and the downstream OTDR back-reflected signal) between the optical network unit (ONU1) and the optical line terminal (OLT1); and
- the duration (dead time represented in FIG. 4C) of the upstream OTDR source signal;

Fig. 4D shows the time interval between two PON data frames and the OTDR pulse (packet). To avoid any interference between the PON signal carrying the data frames and the OTDR signal, the OTDR signal and the PON signal should not be received at the same time as mentioned already. Therefore, if the propagation time between ONT / ONU and OLT is t1 (0km to 40km, thus 0sec to 200µs), the OLT may stop emitting PON data frames a time t1 before OTDR pulse start and start again only a time t1 after the OTDR source signal ends.

But the duration of the interruption can be reduced: for example in a PON with 15 km between OLT and the splitter, and then 5 km between splitter and the ONU, it may be sufficient to scan only this 5 last km with the OTDR source signal from the concerned ONU. The transmission of the PON data signal may therefore only be interrupted for twice the propagation time between the splitter and the ONU, plus the duration of the OTDR source signal. Other rules may be used to set the duration of the interruption based on network configuration and / or specific monitoring requirements.

Only during the OTDR monitoring cycle, the SOA (SOA12) is used as OTDR source SOA and will be used again as a preamplifier for high-speed PON data signal after the OTDR monitoring cycle.

Further, as the ASE (amplified spontaneous emission) from the SOA generates an optical signal inside the photodiode (PD) through the downstream output of the SOA (SOA12), the OTDR back-reflected signal may be separated in time from the OTDR source signal generated directly by the SOA (SOA12) to avoid specific signal processing to resolve it. As illustrated by FIG. 4A, the distance between the SOA (SOA12) and the photodiode is very short (less than 1 mm in an integrated device, corresponding to less than 10 ps propagation time) so the OTDR source signal from the SOA (SOA12) is immediately detected by the photodiode (PD). Therefore, detection of the OTDR back-reflected signal can start immediately after the end of the OTDR source signal. A defect that is at 1 m from the optical network unit will generate a reflected (attenuated) signal approximatively 9 ns after the beginning of the pulse and at 10 m it is approximatively 90 ns. As we target to detect defects which are not inside the premise of the customer, we can use a short OTDR pulse up to a few 10s of ns long. See also FIG. 4B: representing schematically on a same time scale the pulse generated by the SOA section and the back reflected signal caused by the defect in the optical fiber (300).

The impact of these measurement on the PON traffic is negligible. If we consider a monitoring once per day for each of the user of a 64 user PON network, this means approximatively 3 OTDR measurement cycles per hour. If we consider a total time for OTDR measurement using 2 frames that is repeated 1k-times for averaging to improve the OTDR signal quality we will lose only 3x2000 frames/28800000 frames (<< 1%) of the bit rate. Also a monitoring cycle every hour may cause tolerable overhead and infrastructure checks can also be shifted to the nights where less ONUs are typically active and traffic bearing. As the OLT is the master for the PON data signal transmission and provides as well the trigger for OTDR measurements from the ONU side the OLT can apply an optimization and prioritization between traffic throughput and infrastructure inspections.

In case that the OLT transmitter pauses for a single downstream frame without sending any PSBd signal, the ONU won't be able to receive the PSBd signal. However, the frame counter of the ONU should be able to adapt as the sync state-machine can take skipping at least one PSBd ("void frame" of FIG. 4B) to allow clock recovery of the ONU. In case that the OLT transmitter pauses for very few downstream frames (e.g. maximum 3 frames) that are subsequent in time the ONU may not be able to tolerate the absence of the PSBd's. As long as the ONU can be kept in the re-sync state it is still acceptable and only entering the Hunt state (if for M - 1 consecutive PHY frames either PSync verification or super frame counter (SFC) verification fails, the ONU will declare loss of downstream synchronization, discard the local SFC copy, and transition into the so called Hunt state) is to be avoided as the ONT / ONU will declare out of sync. This process is possible as the PON system allows for single/multiple sync-word misses due to bit errors (the PSBd is not protected by FEC so prone to errors).

Contrarily, a longer and complete interruption of downstream PON data frames should preferably be avoided, to avoid the ONU to go out of sync or re-sync state and requires to re-range. Thus, there are two potential ways to improve the situation.

One way, as basically explained above, is to allow a very low number of downstream frames to be paused only and this to keep the ONU in sync or in re-sync and to implement a clock recovery cycle if necessary, thus, requiring relocking after the re-initiation of downstream data frame transmission.

A second approach would be to not skip the physical synchronization block PSBd (including the synchronization word) and only suppress the useful data frame content (payload data), so that the downstream ONU sync state machine will not detect any change. This way, the clock recovery does also receive a data input. This data input can be used to allow locking of the clock recovery for a frame. The transmission of the PSBd from the OLT to the ONU will cause dead times for the OTDR reception process. However, as the timing is well known, multiple OTDR measurements would be required in that case with varying OTDR pulse offset for launching from the ONU side. Afterwards a digital or analog signal processing circuit can be used to generate a single OTDR curve out of the multiple measurements.

A second embodiment will be described by reference to FIGS. 5A to 5D. As represented by FIG. 5A, in this second embodiment the same SOA section (SOA12) are used as an optical preamplifier for the downstream optical signal (this downstream optical signal may include during a monitoring cycle not only a PON data signal but also an OTDR back reflected signal, the later being also amplified by the SOA section (SOA12)) and as a source for OTDR monitoring: only one single SOA section may be used as described for FIG. 2. A photodiode (PD) is optically connected to a downstream output of the SOA section (SOA12) and configured to convert the amplified optical signal into an electrical signal. In this second embodiment, no temporal multiplexing is used and a separation of the OTDR signal component corresponding to the upstream OTDR source signal and / or a downstream OTDR back-reflected signal carried from the PON data signal component may to be performed by a detection circuit section (DEC).

The optical network unit (ONU1) may further include a signal processing circuit (SPC) configured to analyze or otherwise process the OTDR signal component corresponding to the upstream OTDR source signal and / or a downstream OTDR back-reflected signal.

As represented by FIG. 5B the SOA section (SOA12) is operated to alternate between emission time intervals during which the upstream OTDR source signal is generated and detection time intervals during which the generation of the upstream OTDR source signal is interrupted and the downstream OTDR reflected signal may be detected in response to the upstream OTDR source signal generated in the previous emission time interval. In this second embodiment, the transmission through the optical fiber of PON data frames may continue in parallel to the emission time intervals and detection time intervals.

The detection circuit section (DEC) is configured to detect or extract in the electrical signal generated by the photodiode (PD) an OTDR signal component corresponding to the upstream OTDR source signal and / or a downstream OTDR back-reflected signal carried by the downstream optical signal.

The detection circuit section (DEC) may be implemented as a frequency filtering circuit section configured to separate the high-frequency PON data signal component from the low frequency OTDR signal component in the electrical signal generated by the photodiode. In an example, the filtering is implemented in a biasing circuit of the photodiode. In another example, the filtering may be implemented by a signal processing circuit which follows the photodiode and is configured to implement low pass frequency or high pass frequency filtering.

The biasing circuit is electrically connected to the photodiode and configured to extract from the electrical signal a low frequency signal corresponding to the downstream OTDR back-reflected signal and / or the upstream OTDR source signal and to extract a high frequency signal corresponding to a downstream passive optical network data signal received through the optical fiber. In the example of FIG. 5C a biasing circuit includes a 50 Ohm resistor R5 can either be a real resistor or represent the input impedance of an electronic circuit like a TIA (trans-impedance amplifier). The low frequency signal component is detected at the voltage node V_OTDR at output of the photodiode (PD) and the high frequency signal component is detected at the voltage node V_HF at the input of the photodiode (PD).

FIG. 5D shows the transfer function of this biasing circuit and shows that we can separate the OTDR signal from the PON HF signal. The V_OTDR curve corresponds to the transfer function of the biasing circuit of FIG. 5C that operates as low pass filter and the V_load curve corresponds to the frequency spectrum of the PON data signal: the two curves cross each other at a point corresponding approximately to the cut off frequency of the low pass filter.

This separation of the data signal for the high-speed system and the OTDR data signal can be simplified if the PON data signal is line coded with e.g. a 8B/10B coding to suppress the lower-frequency content of the PON data signal. Such line coding is available in current PON generations, e.g. scrambled NRZ at XGS-PON or 64B/66B for 10G IEEE PON and it will be available at higher data rate PON as well. A 8b/10b coding is a line code that maps 8-bit words to 10-bit symbols to achieve DC-balance and bounded disparity, and yet provides enough state changes to allow reasonable clock recovery. This means that the difference between the counts of ones and zeros in a string of at least 20 bits is no more than two, and that there are no more than five ones or zeros in a row. This line code is used to reshuffle the frequency content of the signal to avoid the occurrence of low frequencies by limiting the number of consecutive ones and zeros. This helps to reduce the demand for the lower bandwidth limit of the PON channel necessary to transfer the PON data signal.

In case of a single SOA used at the optical network unit ONU1 the back-reflected OTDR signal may be modulated by the OTDR source signal: the OTDR back reflected signal propagates in downstream direction through this single SOA section and this may cause if a continuous OTDR modulation is used a remodulation of the OTDR back-reflected signal thereby complicating the analysis of the OTDR signal, or the OTDR back-reflected signal. As illustrated by FIG. 5B, to avoid such a modulation, the OTDR monitoring is performed by alternating emission time intervals (510, 511) during which the OTDR source signal is emitted and detection time intervals (520, 521) during which the transmission of the OTDR source signal is interrupted to allow detection of the back-reflected OTDR signal. This alternate emit/detection scheme based on a periodic allocation of emission time intervals and detection time intervals allows to avoid this remodulation of the OTDR back-reflected signal.

The length of the individual time intervals may vary over a measurement cycle and depends on the one-way propagation delay of the fiber section to be monitored. A typical length of the fiber drop section may be between 0.05 km and 10 km corresponding to 0.5µs to 100µs round-trip propagation delay. The conditions to obtain optimum back-reflected OTDR signal can change depending on the fiber length and thus the pattern or pulse shape selected for the OTDR source signal as the length of the emission time intervals and detection time intervals may vary.

Analog or digital signal processing circuit may be used to separate the received OTDR signal from the PON data frame signal as well as to mitigate the influence of the OTDR source signal on the PON data frame signal. The intention here is to avoid the periodically allocation of transmitted and received OTDR patterns.

Since the OTDR source signal is known by the optical network unit, the intensity modulation of the OTDR source signal can be subtracted from the back-reflected OTDR signal. The phase delay and the magnitude of the OTDR source signal may be adapted for optimization. An analog signal processing may be applied, e.g. by temporally splitting the electrical signal generated by the photodiode from the preamplified downstream optical signal in two temporal portions to separate the OTDR source signal from the OTDR back-reflected signal, connecting the output of the photodiode and adding a delay line and an attenuator to be applied to the OTDR source signal before subtracting the delayed and attenuated signal from the received OTDR back-reflected signal after conversion through the first SOA section, the photodiode PD + and biasing or TIA circuit. Another approach is the digitalization of the transmitted OTDR and received signal OTDR and data signal to perform the subtraction.

A similar approach can be used to mitigate potential influences of the OTDR source onto the PON data signal.

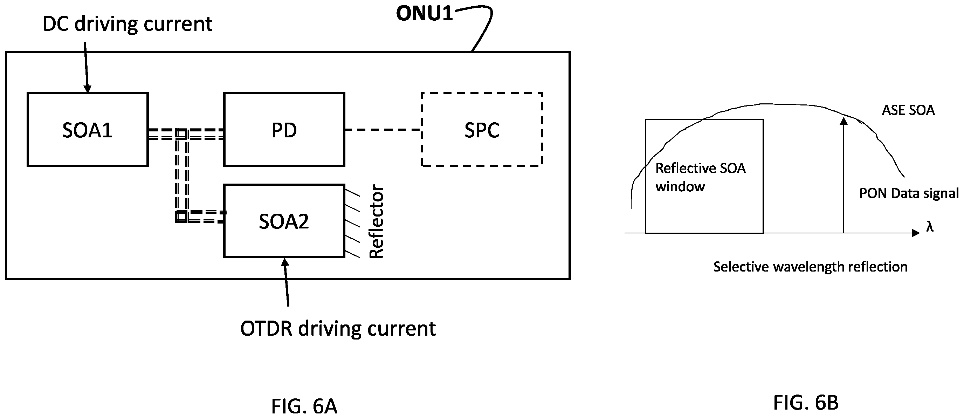

A third embodiment will be described by reference to FIG. 6A-6B. In this third embodiment, two distinct SOA sections (SOA1, SOA2) are used as explained by reference to FIG. 3. The first SOA section (SOA1) is used as an optical preamplifier for the downstream optical signal (this downstream optical signal may carry during a monitoring cycle a PON data signal but also an OTDR back reflected signal, the latter being therefore also amplified by the SOA section (SOA12)) and the second SOA section (SOA2) is used as a source for OTDR monitoring. The second SOA section (SOA2) is optically connected to the downstream output of the first SOA section (SOA1). An optical splitter may be used to connect to the downstream output of the first SOA section (SOA1) both the photodiode and the second SOA section (SOA2). A photodiode (PD) that is optically connected to a downstream output of the first SOA section (SOA1) and is configured to convert the amplified optical signal into an electrical signal.

In this third embodiment, no temporal multiplexing is used and a separation of the OTDR signal component corresponding to the upstream OTDR source signal and / or a downstream OTDR back-reflected signal from the PON data signal component may be performed by a detection circuit section (DEC).

Like the second embodiment, the optical network unit includes in the third embodiment a detection circuit section (DEC) configured to detect and / or extract from the electrical signal an OTDR signal component corresponding to the upstream OTDR source signal and / or a downstream OTDR back-reflected signal carried by the downstream optical signal. In one example the detection circuit section (DEC) includes a biasing circuit electrically connected to the photodiode and configured to extract from the electrical signal a low frequency signal corresponding to the downstream OTDR back-reflected signal and / or the upstream OTDR source signal and to extract a high frequency signal corresponding to a downstream passive optical network data signal received through the optical fiber.

The detection circuit section (DEC) may be implemented as a frequency filtering circuit section configured to separate the high-frequency PON data signal component from the low frequency OTDR signal component in the electrical signal generated by the photodiode. In an example, the filtering is implemented in a biasing circuit of the photodiode. In another example, the filtering may be implemented by a signal processing circuit (TIA, DSP) which follows the photodiode and is configured to implement low pass frequency or high pass frequency filtering.

The SOA in this embodiment comprises two sections, as represented in FIG. 6A. This is particularly interesting in the case of monolithically integrated device as it requires no additional process compared to a single SOA embodiment because this embodiment uses only the required building blocks: photodiode, SOA section and passive coupling section between first SOA section (SOA1) and photodiode (PD). In this embodiment, the first SOA section (SOA1) is driven by DC current to produce static preamplification gain. The first SOA section (SOA1) acts simultaneously as a preamplifier for the photodiode (PD) to improve the photodiode sensitivity and as a booster for the OTDR signal.

After this first SOA section (SOA1), a passive splitter may be implemented to separately connect the downstream output of the first SOA section to the photodiode (PD) and to a second SOA section (SOA2) which is a reflective SOA associated with a reflector. The second SOA section (SOA2) is driven by a modulated driving current to generate the OTDR source signal. As the second SOA section (SOA2) is not directly connected to the photodiode (PD), the only OTDR signal component detected by the photodiode (PD) is the back-reflected OTDR signal(s): this avoids the use of a signal processing circuit to subtract the OTDR source signal from the back-reflected and received OTDR signal and also to apply alternatively emission time intervals and detection time intervals like in the embodiment of FIG. 5A because in the embodiment of FIG. 6A the back-reflected signal reaches only the DC driven first SOA section. However, the separation in the electrical signal produced by the photodiode of the OTDR signal component and the PON data signal may be performed, for example using a biasing circuit described for the second embodiment (see FIG. 5C).

In this third embodiment of FIG. 6A, the reflector of the reflective SOA section (SOA2) may be selective to reflect only a band of wavelength such that the PON data signal is not reflected and reinjected in the optical fiber. Furthermore, if mainly the low wavelengths of the SOA amplified spontaneous emission are reflected as illustrated by FIG. 6B, a large power density of low wavelength is obtained inside the first SOA section and this produces a gain clamping effect : if the reflective power in the low wavelength is large enough, the carrier dynamics is governed by the light in this low wavelength, therefore a variation of power of the signal at higher wavelength will not influence the carrier concentration in the SOA, therefore the saturation is improved for these longer wavelength. This improves the linearity of this first SOA section for the PON wavelength. This is particularly interesting when complex modulation formats like PAM4 might be applied in future generations of PON.

A fourth embodiment will be described by reference to FIG. 7. As explained by reference to FIG. 3 two distinct SOA sections (SOA1, SOA2) are used. The first SOA section (SOA1) is used as an optical preamplifier for the downstream optical signal (noting that this downstream optical signal may carry during a monitoring cycle a PON data signal but also an OTDR back reflected signal, the latter being therefore also amplified by the SOA section (SOA12)) and the second SOA section (SOA2) is used as a source for OTDR monitoring. The second SOA section (SOA2) is optically connected to the downstream output of the first SOA section (SOA1). A first photodiode (PON-PD) that is optically connected to a downstream output of the first SOA section (SOA1) is configured to convert the amplified optical signal into a first electrical signal.

In this fourth embodiment of FIG. 7, no temporal multiplexing is used and a separation of the OTDR signal component corresponding to the upstream OTDR source signal and / or a downstream OTDR back-reflected signal carried from the PON data signal component may be performed optically by a detection circuit section (DEC). The OTDR source signal is generated and sent in upstream direction. The OTDR source signal is reflected in downstream direction independently of the PON data signal (at least at the considered levels of optical intensity, i.e. no nonlinear effects are present on the optical fiber introduced by one or the other signal strength). The PON data signal may be independently transmitted from the OLT such that the optical signal in downstream direction may include at a given time not only a PON data signal but also an OTDR back reflected signal. To allow the analysis of the OTDR back reflected signal, a separation of the OTDR back reflected signal from the PON data signal is here optically performed.

In the fourth embodiment of FIG. 7, the detection circuit section (DEC) includes a second photodiode (OTDR-PD) optically connected to a downstream output of the first SOA section (SOA1). The second photodiode (OTDR-PD) is configured to detect the OTDR signal component of the amplified optical signal and to convert it into a second electrical signal. No biasing circuit or filtering circuit is therefore necessary: instead optical separation between OTDR signal component and PON data signal component is performed optically: the first photodiode (PON-PD) may be configured to detect only the (high frequency) PON data signal component of the amplified optical signal while the second photodiode (OTDR-PD) to detect the only the (low frequency) OTDR signal component. The photodiode PON-PD may be a typical high speed photodiode with its classical PON implementation (connection to high speed TIA, standard biasing circuit of high speed photodiode) and the photodiode OTDR-PD may be a low speed photodiode with classical implementation for low speed detection (low noise amplifier,...).

In the fourth embodiment of FIG. 7, a signal processing circuit (SPC) configured to analyze or otherwise process the OTDR signal component corresponding to the upstream OTDR source signal and / or a downstream OTDR back-reflected signal may be connected directly to the second photodiode (OTDR-PD) and applied to the second electrical signal. Like in the embodiment of FIG. 6A optical separation is implemented by the second photodiode (OTDR-PD) configured to detect the OTDR signal component of the amplified optical signal and to convert it into a second electrical signal. Here also an optical filter may be inserted in the chain after the first SOA section SOA1 (in downstream direction). The filter may only allow to pass the downstream PON data signal (first wavelength band) in its transmission direction to reach the PON-PD. A second component of the filter may be used to send the ODTR part (second wavelength band) to the second photodiode (OTDR-PD) and also works bi-directionally for the OTDR source (same wavelength or wavelength band is used for the OTDR source and back-reflected OTDR signal).

In the fourth embodiment of FIG. 7, like in the third embodiment of FIG. 6A, a passive splitter may be implemented to separately connect the downstream output of the first SOA section to the first photodiode (PON-PD), to the second SOA section (SOA2) which is a reflective SOA associated with a reflector and to the second photodiode (OTDR-PD). The description made by reference to FIG. 6A also applies here for the common elements. It is worth noting that if a wavelength selective mirror is used to have a low wavelength OTDR signal, the splitter may also be wavelength dependent so that no OTDR back-reflected signal comes to the first photodiode (PON-PD) and no PON signal comes to the second photodiode (OTDR-PD). This will make even simpler the reduction of crosstalk between OTDR signal and PON signal.

As used in this application, the term "circuitry" or "circuit" may refer to one or more or all of the following:
(a) hardware-only circuit implementations (such as implementations in only analog and/or digital circuitry, including any optical circuitry adapted for processing in any manner optical signal(s)) and
(b) combinations of hardware circuits and software, such as (as applicable) : (i) a combination of analog and/or digital hardware circuit(s) with software/firmware and (ii) any portions of hardware processor(s) with software (including digital signal processor(s)), software, and memory(ies) that work together to cause an apparatus to perform various functions); and
(c) hardware circuit(s) and or processor(s), such as a microprocessor(s) or a portion of a microprocessor(s), that requires software (e.g., firmware) for operation, but the software may not be present when it is not needed for operation."

This definition of "circuitry" or "circuit" applies to all uses of this term in this application, including in any claims. As a further example, as used in this application, the term circuitry also covers an implementation of merely a hardware circuit or processor (or multiple processors) or portion of a hardware circuit or processor and its (or their) accompanying software and/or firmware. The term circuitry also covers, for example and if applicable to the particular claim element, an integrated circuit for a network element or network node or any other computing device or network device. The term circuitry may cover digital signal processor (DSP) hardware, network processor, application specific integrated circuit (ASIC), field programmable gate array (FPGA), etc.

The "circuitry" or "circuit" may be or include, for example, hardware, programmable logic, a programmable processor that executes software or firmware, and/or any combination thereof (e.g. a processor, control unit/entity, controller) to execute instructions or software and control transmission and receptions of signals, and a memory to store data and/or instructions.

The "circuitry" or "circuit" may also make decisions or determinations, generate frames, packets or messages for transmission, decode received frames or messages for further processing, and other tasks or functions described herein. The circuitry may control transmission of signals or messages over a radio network, and may control the reception of signals or messages, etc., via a radio network (e.g., after being down-converted by radio transceiver, for example).

The terminology used herein is for the purpose of describing particular embodiments only and is not intended to be limiting. As used herein, the singular forms "a," "an," and "the," are intended to include the plural forms as well, unless the context clearly indicates otherwise.

It will be further understood that the terms "comprises," "comprising," "includes," and/or "including," when used herein, specify the presence of stated features, integers, steps, operations, elements, and/or components, but do not preclude the presence or addition of one or more other features, integers, steps, operations, elements, components, and/or groups thereof.

Although the terms "first", "second", etc. may be used herein to describe various elements, these elements should not be limited by these terms. These terms are only used to distinguish one element from another. For example, a first element could be termed a second element, and similarly, a second element could be termed a first element, without departing from the scope of this disclosure. As used herein, the term "and/or," includes any and all combinations of one or more of the associated listed items. Further, in some embodiments the terms "first" and "second" may designate a same physical element having several functions, implemented either simultaneously or alternately or using any other scheme as described herein.

When an element is referred to as being "connected," or "coupled," to another element, it can be directly connected or coupled to the other element or intervening elements may be present. By contrast, when an element is referred to as being "directly connected," or "directly coupled," to another element, there are no intervening elements present. Other words used to describe the relationship between elements should be interpreted in a like fashion (e.g., "between," versus "directly between," "adjacent," versus "directly adjacent," etc.).

While aspects of the present disclosure have been particularly shown and described with reference to the embodiments above, it will be understood by those skilled in the art that various additional embodiments may be contemplated by the modification of the disclosed machines, systems and methods without departing from the scope of the appended claims. Such embodiments should be understood to fall within the scope of the appended claims.

## Claims

1. An apparatus (ONU1) comprising:
a preamplification semiconductor optical amplifier, SOA, section (SOA1; SOA12) configured to receive at a first output a first optical signal transmitted through an optical fiber and to perform preamplification of the first optical signal to generate at a second output an amplified optical signal;
a first photodiode (PD, PON-PD) optically connected to the second output of the preamplification SOA section (SOA1; SOA12) and configured to convert the amplified optical signal into a first electrical signal;
a source signal generation SOA section (SOA2; SOA12) configured to generate an Optical Time Domain Reflectometry, OTDR, source signal for transmission through the optical fiber in a direction opposite to the first optical signal;
wherein the preamplification SOA section (SOA1) is configured to receive at the first output in response to the OTDR source signal an OTDR back-reflected signal transmitted through the optical fiber and to perform preamplification of the OTDR back-reflected signal.

2. The apparatus (ONU1) according to claim 1,
wherein the preamplification SOA section (SOA1; SOA12) is operable with a constant driving current to perform preamplification of the first optical signal and the source signal generation SOA section (SOA2; SOA12) is operable with at least one of a pulsed driving current and a modulated driving current to generate the OTDR source signal.

3. The apparatus (ONU1) according to claim 1 or 2,
wherein the source signal generation SOA section (SOA12) and the preamplification SOA section (SOA12) are a same SOA section (SOA12).

4. The apparatus (ONU1) according to any of claims 1 to 3, comprising
a driving circuit (400) configured to receive a trigger signal from an optical line terminal (OLT1) and to cause the source signal generation SOA section (SOA2) to enter into an OTDR monitoring cycle during which the OTDR source signal is transmitted through the optical fiber and an OTDR back-reflected signal is received through the optical fiber, wherein the apparatus is configured to operate in a Passive Optical Network, PON, and transmission of PON data signal through the optical fiber of said PON, is interrupted during the OTDR monitoring cycle.

5. The apparatus (ONU1) according to any of claims 1 to 3, comprising
a detection circuit section (DEC) configured to extract from the first optical signal or the first electrical signal an OTDR signal component corresponding to at least one of the OTDR source signal and the OTDR back-reflected signal carried by the first optical signal.

6. The apparatus (ONU1) according to any of claims 1 to 3 or according to claim 5,
wherein the source signal generation SOA section (SOA12) is configured to alternate between emission time intervals during which the source signal generation SOA section (SOA12) is configured to generate the OTDR source signal and detection time intervals during which the source signal generation SOA section (SOA12) is configured to interrupt the generation of the OTDR source signal to allow the detection of the OTDR reflected signal received in response to an OTDR source signal generated in the previous emission time interval.

7. The apparatus (ONU1) according to any of claims 1 to 3 or claims 5 and 6, comprising
a biasing circuit (DEC) electrically connected to the photodiode and configured to extract from the first electrical signal the OTDR signal component corresponding to at least one of the OTDR back-reflected signal and the OTDR source signal.

8. The apparatus (ONU1) according to claim 1 or 2 or 5 or 7,
wherein the source signal generation SOA section (SOA2) is optically connected to the second output of the preamplification SOA section (SOA1).

9. The apparatus (ONU1) according to claim 1 or 2, comprising
a second photodiode (OTDR-PD) optically connected to the second output of the preamplification SOA section (SOA1);
wherein the second photodiode (OTDR-PD) is configured to extract from the amplified optical signal an OTDR signal component corresponding to at least one of a OTDR back-reflected signal and the OTDR source signal and to convert the OTDR signal component into a second electrical signal.

## Patentansprüche

1. Vorrichtung (ONU1), die Folgendes umfasst:
einen optischen Vorverstärkungshalbleiterverstärker(SOA)-Bereich (SOA1; SOA12), der dazu ausgelegt ist, an einem ersten Ausgang ein erstes optisches Signal zu empfangen, das über eine optische Faser übertragen wird, und eine Vorverstärkung des ersten optischen Signals durchzuführen, um an einem zweiten Ausgang ein vorverstärktes optisches Signal zu erzeugen;
eine erste Fotodiode (PD, PON-PD), die mit dem zweiten Ausgang des Vorverstärkungs(SOA)-Bereichs (SOA1; SOA12) optisch verbunden und dazu ausgelegt ist, das verstärkte optische Signal in ein erstes elektrisches Signal umzuwandeln;
einen Quellsignalerzeugungs(SOA)-Bereich (SOA2; SOA12), der dazu ausgelegt ist, ein optisches Zeitdomänenreflektometrie(OTDR)-Quellsignal zur Übertragung über die optische Faser in einer Richtung, die dem ersten optischen Signal entgegengesetzt ist, zu erzeugen;
wobei der Vorverstärkungs(SOA)-Bereich (SOA1) dazu ausgelegt ist, in Reaktion auf das OTDR-Quellsignal am ersten Ausgang ein zurückreflektiertes OTDR-Signal zu empfangen, das über die optische Faser übertragen wird, und eine Vorverstärkung des zurückreflektierten OTDR-Signals durchzuführen.

2. Vorrichtung (ONU1) nach Anspruch 1,
wobei der Vorverstärkungs(SOA)-Bereich (SOA1; SOA12) mit einem konstanten Antriebsstrom betreibbar ist, um eine Vorverstärkung des ersten optischen Signals durchzuführen, und der Quellsignalerzeugungs(SOA)-Bereich (SOA2; SOA12) mit mindestens einem von einem gepulsten Antriebsstrom und einem modulierten Antriebsstrom betreibbar ist, um das OTDR-Quellsignal zu erzeugen.

3. Vorrichtung (ONU1) nach Anspruch 1 oder 2,
wobei der Quellsignalerzeugungs(SOA)-Bereich (SOA12) und der Vorverstärkungs(SOA)-Bereich (SOA12) ein selber SOA-Bereich (SOA12) sind.

4. Vorrichtung (ONU1) nach einem der Ansprüche 1 bis 3, die Folgendes umfasst
eine Ansteuerschaltung (400), die dazu ausgelegt ist, von einem optischen Leitungsendgerät (OLT1) ein Auslösesignal zu empfangen und den Quellsignalerzeugungs(SOA)-Bereich (SOA2) zu veranlassen, in einen OTDR-Überwachungszyklus einzutreten, während dem das OTDR-Quellsignal über die optische Faser übertragen wird und ein zurückreflektiertes OTDR-Signal über die optische Faser empfangen wird, wobei die Vorrichtung dazu ausgelegt ist, in einem passiven optischen Netzwerk, PON, betrieben zu werden, und eine Übertragung eines PON-Datensignals über die optische Faser des PON während des OTDR-Überwachungszyklus unterbrochen ist.

5. Vorrichtung (ONU1) nach einem der Ansprüche 1 bis 3, die Folgendes umfasst
einen Detektionsschaltungsbereich (DEC), der dazu ausgelegt ist, aus dem ersten optischen Signal oder dem ersten elektrischen Signal eine OTDR-Signalkomponente zu extrahieren, die mindestens einem des OTDR-Quellsignals und des zurückreflektierten OTDR-Signals entspricht, das vom ersten optischen Signal transportiert wird.

6. Vorrichtung (ONU1) nach einem der Ansprüche 1 bis 3 oder nach Anspruch 5,
wobei der Quellsignalerzeugungs(SOA)-Bereich (SOA12) dazu ausgelegt ist, zwischen Emissionszeitintervallen, in denen der Quellsignalerzeugungs(SOA)-Bereich (SOA12) dazu ausgelegt ist, das OTDR-Quellsignal zu erzeugen, und Detektionszeitintervallen zu wechseln, in denen der Quellsignalerzeugungs(SOA)-Bereich (SOA12) dazu ausgelegt ist, die Erzeugung des OTDR-Quellsignals zu unterbrechen, um die Detektion des reflektierten OTDR-Signals zu erlauben, das in Reaktion auf ein OTDR-Quellsignal empfangen wird, das im vorherigen Emissionszeitintervall erzeugt wurde.

7. Vorrichtung (ONU1) nach einem der Ansprüche 1 bis 3 oder 5 und 6, die Folgendes umfasst
eine Vorspannungsschaltung (DEC), die elektrisch mit der Fotodiode verbunden und dazu ausgelegt ist, aus dem ersten elektrischen Signal die OTDR-Signalkomponente zu extrahieren, die mindestens einem des zurückreflektierten OTDR-Signals und des OTDR-Quellsignals entspricht.

8. Vorrichtung (ONU1) nach Anspruch 1 oder 2 oder 5 oder 7,
wobei der Quellsignalerzeugungs(SOA)-Bereich (SOA2) mit dem zweiten Ausgang des Vorverstärkungs(SOA)-Bereichs (SOAL) optisch verbunden ist.

9. Vorrichtung (ONU1) nach Anspruch 1 oder 2, die Folgendes umfasst
eine zweite Fotodiode (OTDR-PD), die mit dem zweiten Ausgang des Vorverstärkungs(SOA)-Bereichs (SOAL) optisch verbunden ist;
wobei die zweite Fotodiode (OTDR-PD) dazu ausgelegt ist, aus dem verstärkten optischen Signal eine OTDR-Signalkomponente zu extrahieren, die mindestens einem eines zurückreflektierten OTDR-Signals und des OTDR-Quellsignals entspricht, und die OTDR-Signalkomponente in ein zweites elektrisches Signal umzuwandeln.

## Revendications

1. Appareil (ONU1) comprenant :
une section d'amplificateur optique à semi-conducteur, SOA, de pré-amplification (SOA1 ; SOA12) configurée pour recevoir, à une première sortie, un premier signal optique transmis par une fibre optique, et pour effectuer une pré-amplification du premier signal optique afin de générer, à une deuxième sortie, un signal optique amplifié ;
une première photodiode (PD, PON-PD) connectée optiquement à la deuxième sortie de la section SOA de pré-amplification (SOA1 ; SOA12) et configurée pour convertir le signal optique amplifié en un premier signal électrique ;
une section SOA de génération de signal source (SOA2 ; SOA12) configurée pour générer un signal source de réflectométrie optique dans le domaine temporel, OTDR, pour la transmission à travers la fibre optique dans une direction opposée au premier signal optique ;
dans lequel la section SOA de pré-amplification (SOA1) est configurée pour recevoir, à la première sortie, en réponse au signal source OTDR, un signal OTDR rétroréfléchi transmis à travers la fibre optique, et pour effectuer une pré-amplification du signal OTDR rétroréfléchi.

2. Appareil (ONU1) selon la revendication 1,
dans lequel la section SOA de pré-amplification (SOA1 ; SOA12) peut fonctionner avec un courant d'attaque constant pour effectuer une pré-amplification du premier signal optique, et la section SOA de génération de signal source (SOA2 ; SOA12) peut fonctionner avec au moins un parmi un courant d'attaque pulsé et un courant d'attaque modulé afin de générer le signal source OTDR.

3. Appareil (ONU1) selon la revendication 1 ou 2,
dans lequel la section SOA de génération de signal source (SOA12) et la section SOA de pré-amplification (SOA12) sont une même section SOA (SOA12).

4. Appareil (ONU1) selon l'une des revendications 1 à 3, comprenant
un circuit d'attaque (400) configuré pour recevoir un signal de déclenchement d'un terminal de ligne optique (OLT1), et pour amener la section SOA de génération de signal source (SOA2) à entrer dans un cycle de surveillance OTDR pendant lequel le signal source OTDR est transmis à travers la fibre optique, et un signal OTDR rétroréfléchi est reçu à travers la fibre optique, dans lequel l'appareil est configuré pour fonctionner dans un réseau optique passif, PON, et la transmission du signal de données PON à travers la fibre optique dudit PON est interrompue pendant le cycle de surveillance OTDR.

5. Appareil (ONU1) selon l'une des revendications 1 à 3, comprenant
une section de circuit de détection (DEC) configurée pour extraire du premier signal optique ou du premier signal électrique une composante de signal OTDR correspondant à au moins un parmi le signal source OTDR et le signal OTDR rétroréfléchi porté par le premier signal optique.

6. Appareil (ONU1) selon l'une des revendications 1 à 3 ou selon la revendication 5,
dans lequel la section SOA de génération de signal source (SOA12) est configurée pour alterner entre des intervalles de temps d'émission pendant lesquels la section SOA de génération de signal source (SOA12) est configurée pour générer le signal source OTDR et des intervalles de temps de détection pendant lesquels la section SOA de génération de signal source (SOA12) est configurée pour interrompre la génération du signal source OTDR pour permettre la détection du signal réfléchi OTDR reçu en réponse à un signal source OTDR généré dans l'intervalle de temps d'émission précédent.

7. Appareil (ONU1) selon l'une des revendications 1 à 3 ou des revendications 5 et 6, comprenant
un circuit de polarisation (DEC) connecté électriquement à la photodiode et configuré pour extraire du premier signal électrique la composante de signal OTDR correspondant à au moins parmi le signal OTDR rétroréfléchi et le signal source OTDR.

8. Appareil (ONU1) selon la revendication 1 ou 2 ou 5 ou 7,
dans lequel la section SOA de génération de signal source (SOA2) est connectée optiquement à la deuxième sortie de la section SOA de pré-amplification (SOA1).

9. Appareil (ONU1) selon la revendication 1 ou 2, comprenant
une deuxième photodiode (OTDR-PD) connectée optiquement à la deuxième sortie de la section SOA de pré-amplification (SOA1) ;
dans lequel la deuxième photodiode (OTDR-PD) est configurée pour extraire du signal optique amplifié une composante de signal OTDR correspondant à au moins un parmi un signal OTDR rétroréfléchi et le signal source OTDR et pour convertir la composante de signal OTDR en un deuxième signal électrique.
